Europäisches Patentamt

European Patent Office

Office européen des brevets

(19)

(11) Publication number : **0 310 419 B1**

# (12) EUROPEAN PATENT SPECIFICATION

(45) Date of publication of patent specification :
14.12.94 Bulletin 94/50

(51) Int. Cl.⁵ : **H04N 3/27**

(21) Application number : 88309106.8

(22) Date of filing : 30.09.88

(54) **Vertical deflection circuit for cathode ray tube display device.**

(30) Priority : 30.09.87 JP 246204/87

(43) Date of publication of application :
05.04.89 Bulletin 89/14

(45) Publication of the grant of the patent :
14.12.94 Bulletin 94/50

(84) Designated Contracting States :
DE GB

(56) References cited :
EP-A- 0 180 761
IBM TECHNICAL DISCLOSURE BULLETIN,
vol. 28, no. 8, January 1986, pages 3292-3293,
New York, US; "Variable interface circuit for
displays"

(73) Proprietor : **KABUSHIKI KAISHA TOSHIBA**
**72, Horikawa-cho**
**Saiwai-ku**
**Kawasaki-shi Kanagawa-ken 210 (JP)**
Proprietor : **TOSHIBA AVE CO., LTD**
**3-3-9, Shinbashi**
**Minato-ku, Tokyo (JP)**

(72) Inventor : **Sumiyoshi, Hajima c/o Patent**
**Division**
**Toshiba Corp.**
**Principal Office**
**1-1-1, Shibaura**
**Minato-ku Tokyo (JP)**

(74) Representative : **Muir, Ian R. et al**
**HASELTINE LAKE & CO.**
**Hazlitt House**
**28 Southampton Buildings**
**Chancery Lane**
**London WC2A 1AT (GB)**

## Description

The present invention relates generally to a vertical deflection circuit for a cathode ray tube display device (referred as to CRT device hereafter), and more particularly, to a vertical deflection circuit for a CRT device used in television receivers.

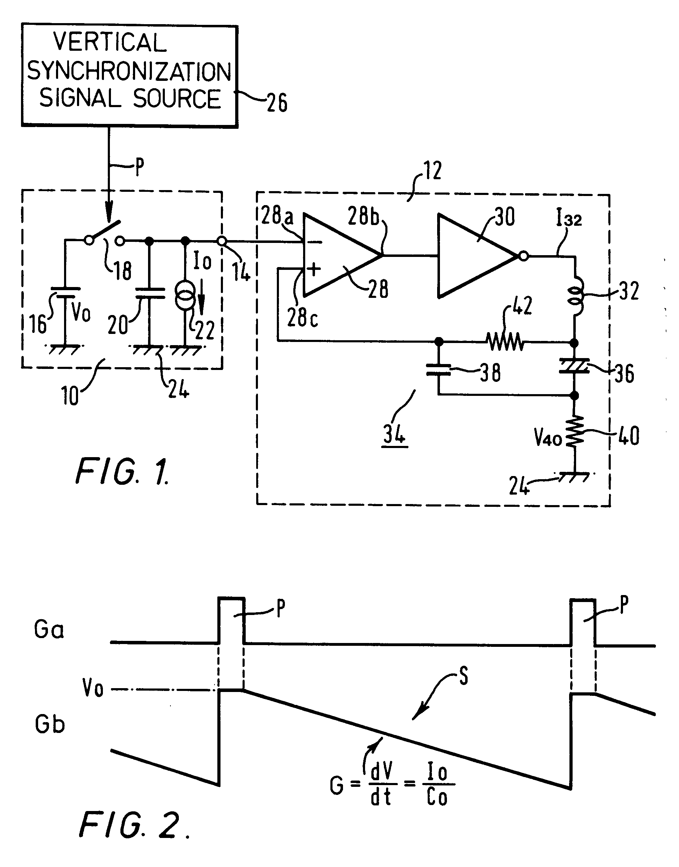

Television receivers are typically provided with CRT devices. Television images are displayed on the CRT device by vertical and horizontal deflections, as well known. **FIGURE 1** shows a typical construction of a conventional vertical deflection circuit for CRT devices.

In **FIGURE 1**, the conventional vertical deflection circuit comprises a sawtooth wave signal generating circuit 10 and a deflection drive circuit 12 coupled to an output terminal 14 of the sawtooth wave signal generating circuit 10. The sawtooth wave signal generating circuit 10 comprises a voltage supply source 16 with a voltage Vo, a switch 18, a capacitor 20 and a current path comprised of a current source 22. The voltage supply source 16 and the switch 18 are coupled in series between the output terminal 14 of the sawtooth wave signal generating circuit 10 and a reference potential source 24. The capacitor 20 and the current source 22 are also coupled between the output terminal 14 of the sawtooth wave generating circuit 10 and the reference potential source 24, respectively.

The switch 18 is controlled for ON/OFF operation by vertical synchronization pulses P, as shown by Graph Ga in **FIGURE 2**. **FIGURE 2** is a timechart diagram showing the vertical synchronization pulses P and a prescribed sawtooth wave signal S, as described later. The vertical synchronization pulses P are supplied form a vertical synchronization signal source 26. The vertical synchronization signal source 26 is constituted by a conventional synchronization signal separation circuit provided in a tuner circuit (not shown) of television receivers. The switch 18 closes for a pulse period of each of the vertical synchronization pulses P so that the capacitor 20 is charged to the voltage Vo of the voltage supply source 16. The switch 18 opens for a non-pulse period of each of the vertical synchronization pulses P so that the charge of the capacitor 20 is gradually discharged through the current source 22. Thus, The sawtooth wave signal S, as shown by Graph Gb in **FIGURE 2**, is obtained from the output terminal 14 of the sawtooth wave signal generating circuit 10. The sawtooth wave signal S is then applied to the deflection drive circuit 12.

The deflection drive circuit 12 comprises a preamplifier 28, a drive amplifier 30, a vertical deflection coil 32 mounted on a CRT device (not shown) and a feedback circuit 34. The feedback circuit 34 comprises first and second feedback capacitors 36 and 38 and first and second feedback resistors 40 and 42. An inverse input terminal 28a of the preamplifier 28 is coupled to the output terminal 14 of the sawtooth wave signal generating circuit 10. The output terminal 28b of the preamplifier 28 is coupled to one terminal of the vertical deflection coil 32 through the drive amplifier 30. Another terminal of the vertical deflection coil 32 is coupled to the ground potential source 24 through the first feedback capacitor 36 and the first feedback resistor 40 of the feedback circuit 34 in series. The other end of the vertical deflection coil 32 is further coupled to the non-inverse input terminal 28c of the preamplifier 28 through the second feedback resistor 42. The connection node between the first feedback capacitor 36 and the first feedback resistor 40 is coupled to the non-inverse input terminal 28c of the preamplifier 28 through the second feedback capacitor 38.

In **FIGURE 2**, the peak value of the sawtooth wave signal S is given by the voltage Vo of the voltage supply source 16. The falling gradient G of each of inclination sections Sa and Sb of the sawtooth wave signal S is given by the following equation;

$$G = \frac{dV}{dt} = \frac{Io}{Co} \quad (1)$$

wherein dV/dt means the differentiation of voltage V. with respect to time t, Io is the current of the current source 22 and Co is the capacitance of the capacitor 20.

As seen from the equation (1), the falling gradient G of each of the inclination sections Sa and Sb is controlled by the current Io of the current source 22, which regulates the discharge characteristics of the capacitor 20. Thus, the minimum value $V_{min}$ of the sawtooth wave signal S is also defined by the current Io of the curent source 22 to adjust the vertical amplitude of images on the CRT device.

A deflection current $I_{32}$ of the vertical deflection coil 32, which corresponds to the sawtooth wave signal S, flows through the first feedback resistor 40. Thus, a prescribed voltage drop $V_{40}$ corresponding to the deflection current $I_{32}$ appears across the first feedback resistor 40. The voltage drop $V_{40}$ is fed back to the non-inverse input terminal 28c of the preamplifier 28 through both the second feedback resistor 42 and the second capacitor 38. Thus, the preamplifier 28 is automatically controlled to stabilize the deflection current $I_{32}$ of the vertical deflection coil 32.

The typical vertical deflection circuit of **FIGURE 1**, however, has a drawback as described below.

There are some television systems different by regions and countries in the world. The television systems are broadly classified into two groups, i.e. the group of 50 Hz system and the group of 60 Hz system by the difference of vertical frequency. Thus, television receivers are desired to cope with both the 50 and 60 Hz vertical frequency systems. However, the vertical amplitude of images on CRT devices obtained by the vertical deflection circuit of **FIGURE 1** varies in accordance with the difference of the vertical frequency. Thus, the vertical deflection circuit of **FIGURE 1** can not cope with both the 50 and 60 Hz vertical frequency systems.

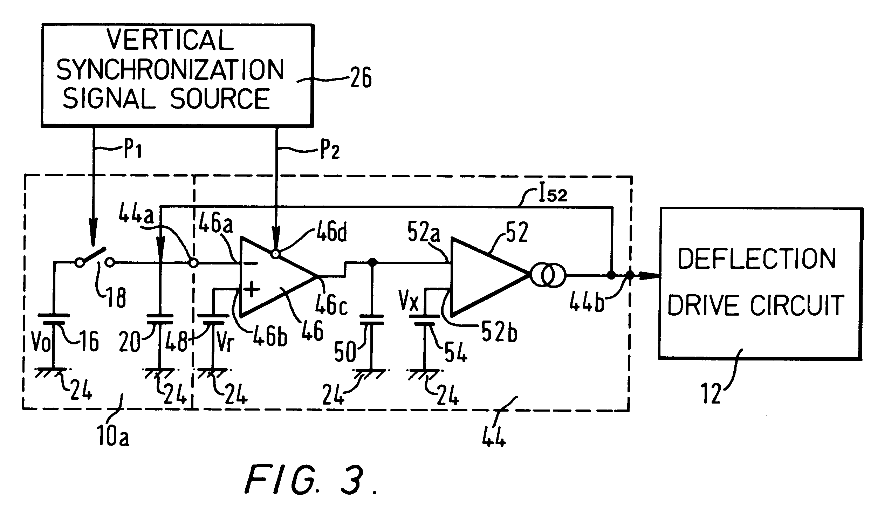

Therefore, another vertical deflection circuit has been developed to cope with the difference of the vertical frequency. **FIGURE 3** shows such a conventional vertical deflection circuit for CRT devices, which can cope with the difference of the vertical frequency. In **FIGURE 3**, the conventional vertical deflection circuit comprises a sawtooth wave signal generating circuit 10a and a deflection drive circuit 12 coupled to the sawtooth wave signal generating circuit 10a. The sawtooth wave signal generating circuit 10a has a circuit construction different from the circuit 10 of **FIGURE 1**, but the deflection drive circuit 12 has a circuit construction the same as the circuit 12 of **FIGURE 1**. Therefore, the explanation for the deflection drive circuit 12 in **FIGURE 3** will be eliminated hereafter.

The sawtooth wave signal generating circuit 10a comprises a first voltage supply source 16 with a voltage Vo, a switch 18, a first capacitor 20 and a vertical amplitude control circuit 44. The first voltage supply source 16 and the switch 18 are coupled in series between an input terminal 44a of the vertical amplitude control circuit 44 and a reference potential source 24. The capacitor 20 is also coupled between the input terminal 44a of the vertical amplitude control circuit 44 and the reference potential source 24.

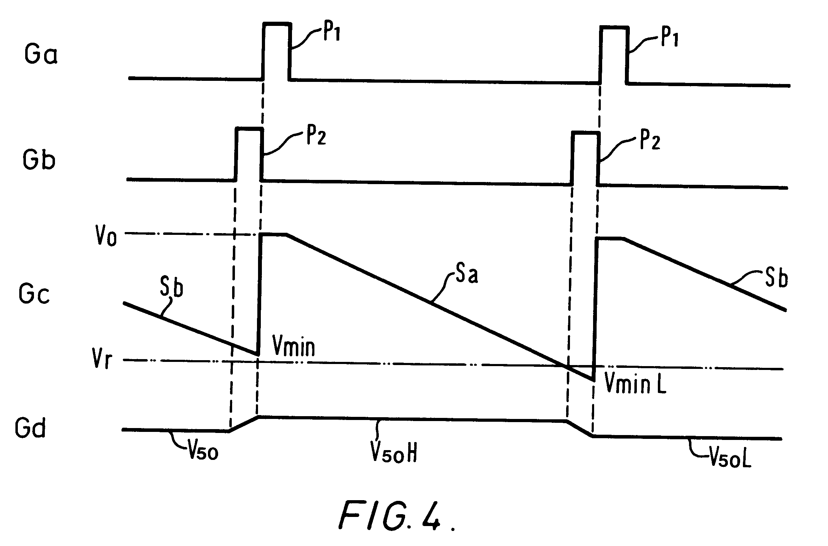

The switch 18 is controlled for ON/OFF operation by a first vertical synchronization pulses P1, as shown by Graph Ga in **FIGURE 4**. **FIGURE 4** is a timechart diagram showing the first vertical synchronization pulses P1, second vertical synchronization pulses P2, a prescribed sawtooth wave signal S and a voltage $V_{50}$ charged on a second capacitor 50, as described later. The first vertical synchronization pulses P1 correspond to the vertical synchronization pulses P in **FIGURE 1**. The second vertical synchronization pulses P2 are generated in association with the first vertical synchronization pulses P1 from the vertical synchronization signal source 26 provided in the tuner circuit (not shown) of television receivers, as described before. The switch 18 closes for a pulse period of each of the vertical first synchronization pulses P1 so that the capacitor 18 is charged to the voltage Vo of the first voltage supply source 16. The switch 18 opens for a non-pulse period of each of the first vertical synchronization pulses P1 so that the charge of the first capacitor 20 is gradually discharged through a voltage-current converter 52, as described later. Thus, a prescribed sawtooth wave signal S, as shown by Graph Gc in **FIGURE 4**, is obtained at the input terminal 44a of the vertical amplitude control circuit 44.

The vertical amplitude control circuit 44 comprises a comparator 46, a second reference voltage source 48 with a voltage Vr, a second capacitor 50, the voltage-current converter 52 and a third reference voltage source 54 with a voltage Vx. The voltage-current converter 52 comprises a voltage comparator and a current source similar to the current source 22 of **FIGURE 1**. A first input terminal 46a of the comparator 46 is coupled to the input terminal 44a of the vertical amplitude control circuit 44. A second input terminal 46b of the comparator 46 is coupled to the reference potential source 24 through the second reference voltage source 48. An output terminal 46c of the comparator 46 is coupled to the reference potential source 24 through the second capacitor 50. A control terminal 46d of the comparator 46 is coupled to the vertical synchronization signal source 26 for receiving the second vertical synchronization pulses P2.

The output terminal 46c is further coupled to a first input terminal 52a of the voltage-current converter 52. A second input terminal 52b of the voltage-current converter 52 is coupled to the reference potential source 24 through the third reference voltage source 54. An output terminal 52c of the voltage-current converter 52 is coupled to the first input terminal 46a of the comparator 46. The output terminal 52c of the voltage-current converter 52 is further coupled to an output terminal 44b of the vertical amplitude control circuit 44.

The sawtooth wave signal S applied to the vertical amplitude control circuit 44 is then compared with the voltage Vr of the second reference voltage source 48 at the comparator 46. The comparator 46 is controlled for ON/OFF operation by the second vertical synchronization pulses P2, as shown by Graph Gb in **FIGURE 4**. The second vertical synchronization pulses P2 are supplied from the synchronization signal separation circuit, similar to the first vertical synchronization pulses P1.

The second vertical synchronization pulses P2 are generated at every time just before the occurrences of the first vertical synchronization pulses P1. The comparator 46 carries out a voltage comparing operation in coincidence with each of end portions of inclination sections Sa and Sb of the sawtooth wave signal S. As a result, the minimum values $V_{min}$ of the inclination sections Sa and Sb of the sawtooth wave signal S are compared with the voltage Vr of the second reference voltage source 48. In other words, the comparator 46 detects differences of the minimum values $V_{min}$ of the inclination sections Sa and Sb of the sawtooth wave signal S from the voltage Vr of the second reference voltage source 48.

An output voltage obtained by the comparator 46, which corresponds to the difference, is stored in the second capacitor 50. The charged voltage $V_{50}$ on the second capacitor 50, as shown by Graph Gd in **FIGURE 4**, is applied to the first input terminal 52a of the voltage-current converter 52.

The voltage-current converter 52 compares the charged voltage $V_{50}$ with the voltage Vx of the third reference voltage source 54. A current $I_{52}$ responsive

to the charged voltage $V_{50}$ is obtained from the voltage-current converter 52. The current $I_{52}$ is fed back to the first capacitor 20 so that the falling gradient G of each of inclination sections Sa and Sb of the sawtooth wave signal S is regulated. The minimum value $V_{min}$ of the sawtooth wave signal S is also controlled by the feedback current $I_{52}$ from the vertical amplitude of the sawtooth wave signal S is automatically regulated.

As shown in **FIGURE 4**, when the vertical amplitude of the sawtooth wave signal S is small, the minimum value $V_{min}$ at the end portion of the inclination section of sawtooth waveform signal S is higher than the voltage Vr of the second reference voltage source 48. In response to the higher minimum value $V_{min}$ H, the voltage $V_{50}$ on the second capacitor 50 rises to the value $V_{50}$ H, as shown by Graph Gd. The higher charged voltage $V_{50}$ H increases the current $I_{52}$ output from the voltage-current converter 52. The increased feedback current $I_{52}$ makes the falling gradient G of the inclination section of the sawtooth wave signal S large. Thus, the vertical amplitude of the sawtooth waveform signal S is expanded.

When the vertical amplitude of the sawtooth wave signal S is large, the minimum value $V_{min}$ at the end portion of the inclination section of sawtooth waveform signal S is lower than the voltage Vr of the second reference voltage source 48. In response to the lower minimum value $V_{min}$ L, the voltage $V_{50}$ on the second capacitor 50 lowers to the value $V_{50}$ L, as shown by Graph Gd. The lower charged voltage $V_{50}$ L decreases the current $I_{52}$ output from the voltage-current converter 52. The decreased feedback current $I_{52}$ makes the falling gradient G of the inclination section of the sawtooth wave signal S small. Thus, the vertical amplitude of the sawtooth waveform signal S is reduced. As a result, the vertical amplitude of the sawtooth wave signal S is automatically adjusted to a prescribed value defined by the voltage Vr of the second reference voltage source 48.

However, the vertical deflection circuit of **FIGURE 3** has another problem that the vertical amplitude control operation is erroneously carried out when the vertical period varies from field to field.

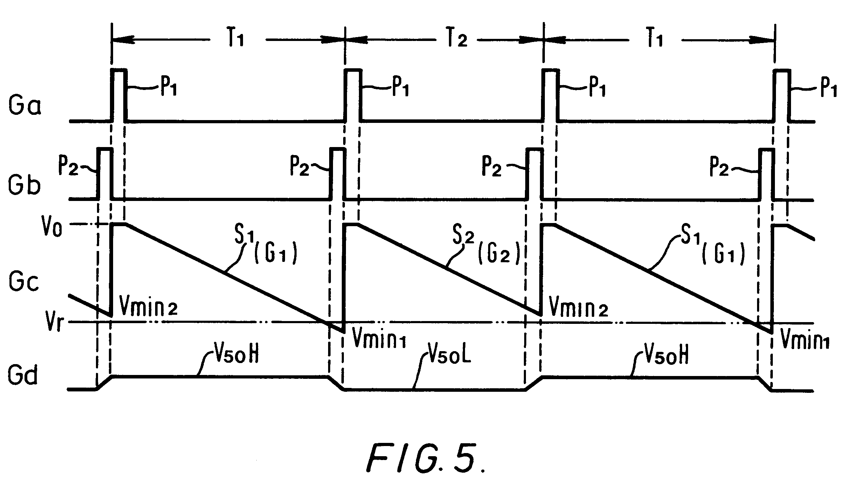

Now, the problem will be described in reference to **FIGURE 5**. **FIGURE 5** is a timechart diagram showing the first vertical synchronization pulses P1 (Graph Ga), the second vertical synchronization pulses P2 (Graph Gb), a prescribed sawtooth wave signal S (Graph Gc) and a voltage $V_{50}$ charged on the second capacitor 50 (Graph Gd). Generally, an interlaced scanning system is widely used in television receivers. In the interlaced scanning system, one frame is performed with a pair of the first and second fields. The vertical periods of the first and second fields occasionally differ from each other. For example, such a situation occurs in still images reproduced from video tape recorders. **FIGURE 5** shows a typical case in that the vertical period $T_1$ of the first field is longer than the vertical period $T_2$ of the second field ($T_1 > T_2$).

In the above situation, each of the first and the second vertical synchronization pulses P1 and P2 occurs with alternately changing intervals, as shown in **FIGURE 5**. When the vertical periods $T_1$ and $T_2$ of the first and second fields differ from each other as described above ($T_1 > T_2$), the minimum values $V_{min\ 1}$ and $V_{min\ 2}$ of the sawtooth wave signal S at the ends of the first and the second fields become lower and higher than the voltage Vr of the second reference voltage 48. The minimum value $V_{min\ 1}$ lower than the voltage Vr causes the second capacitor 50 to discharge current therefrom. Thus, the charged voltage $V_{50}$ on the second capacitor 50 becomes lower. The lower charged voltage $V_{50}$ L is maintained in the period $T_2$ of the second fields, as shown by Graph Gd in **FIGURE 5**. The minimum value $V_{min\ 2}$ higher than the voltage Vr causes the second capacitor 50 to charge current therein. Thus, the charged voltage $V_{50}$ on the second capacitor 50 becomes higher. The higher charged voltage $V_{50}H$ is maintained in the period $T_1$ of the first fields, as shown by Graph Gd in **FIGURE 5**.

The higher charged voltage $V_{50}$ H in the first fields increases the feedback current $I_{52}$ from the voltage-current converter 52. Thus, the falling gradient $G_1$ of the inclination section $S_1$ corresponding to the first field further becomes large. On the other hand, the falling gradient $G_2$ of the inclination section $S_2$ corresponding to the second field further becomes small. As a result of the above operations, the vertical amplitude of the sawtooth wave signal of the first field is increased. On the other hand, the vertical amplitude of the sawtooth wave signal of the second field is decreased. That is, the vertical amplitude of the sawtooth wave signal alternately varies between the first and the second fields without being regulated to the same amplitude, when the vertical periods $T_1$ and $T_2$ of the first and the second fields differ from each other.

Such an erroneous operation in the conventional vertical deflection circuit, as shown in **FIGURE 3**, results in the defect of a blurring of images occuring on the CRT device, especially at the bottom portion of the CRT device.

The present invention seeks to provide a vertical deflection circuit for a CRT device which is able to display a stable image.

The present invention also seeks to provide a vertical deflection circuit for a CRT device which is able to automatically regulate an amplitude of a vertical sawtooth wave signal even when vertical periods vary between fields of the television signals.

According to the present invention there is provided a vertical deflection circuit for vertically sweeping a cathode ray tube display device for a display having first and second fields, the circuit comprising a vertical synchronisation signal source for generating first vertical synchronisation pulses corresponding to both the first and second fields and second vertical synchronisation pulses which are generated at every time just before the occurrence of the first vertical synchronisation pulses a sawtooth wave signal generating circuit for generating a sawtooth wave signal with a gradually falling inclination section, the sawtooth wave signal generating circuit having a capacitor means which is alternately charged and discharged in synchronism with the first vertical synchronisation pulses vertical amplitude control circuit for regulating the minimum value of the inclination section of the sawtooth wave signal the vertical amplitude control circuit having a comparing means for comparing the minimum value of the inclination section of the sawtooth wave signal with a prescribed reference voltage and a current source means responsive to the comparing means for regulating the charge and the discharge current of the capacitor means of the sawtooth wave signal generating circuit wherein vertical deflection circuit further comprises a vertical synchronisation pulse processing means for dividing the frequency of the second vertical synchronisation pulses by 2N, where N is a positive integer, and for controlling the comparing means such that the comparing means operates only during the pulse period of the 2N divided second vertical synchronisation pulses.

A more complete appreciation of the invention and many of the attendant advantages thereof will be readily obtained as the same becomes better understood by reference to the following detailed description when considered in connection with the accompanying drawings, wherein, by way of example;

FIGURE 1 is a circuit diagram showing a vertical deflection circuit for CRT devices known to the applicant;

FIGURE 2 is a waveform diagram showing the operation of the circuit shown in FIGURE 1;

FIGURE 3 is a circuit diagram showing another vertical deflection circuit known to the applicant;

FIGURES 4 and 5 are waveform diagrams explaining the operation of the circuit shown in FIGURE 3;

FIGURE 6 is a circuit diagram showing an embodiment of the vertical deflection circuit for CRT devices according to the present invention; and

FIGURES 7 and 8 are diagrams explaining the operation of the embodiment shown in FIGURE 6.

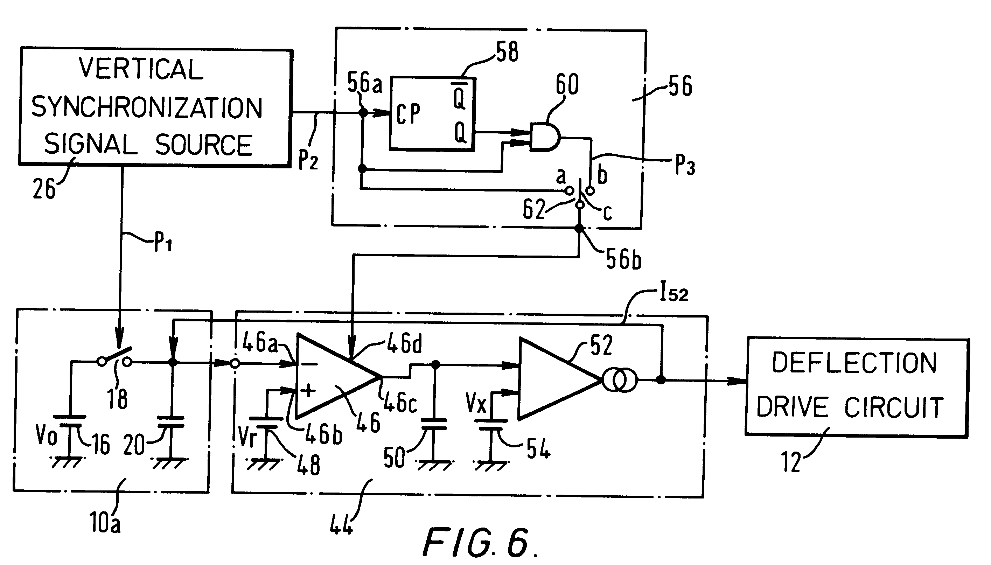

The present invention will be described in detail with reference to FIGURES 6, 7 and 8. Throughout the drawings, reference numerals or letters used in FIGURES 1 through 5 will be used to designate like or equivalent elements for simplicity of explanation.

Referring now to FIGURE 6, a first embodiment of the vertical deflection circuit for a CRT device according to the present invention will be described in detail. FIGURE 6 is a circuit diagram showing the embodiment of the vertical deflection circuit.

In FIGURE 6, the embodiment of the vertical deflection circuit comprises a sawtooth wave signal generating circuit 10a, a deflection drive circuit 12 coupled to the sawtooth wave signal generating circuit 10a and a pulse processing circuit 56. The sawtooth wave signal generating circuit 10a has a circuit construction the same as the circuit 10a of FIGURE 3. The deflection drive circuit 12 has a circuit construction the same as the circuit 12 of FIGURE 1. Therefore, the sawtooth wave signal generating circuit 10a and the deflection drive circuit 12 in FIGURE 3 will be described in case of necessity hereafter.

The pulse processing circuit 56 is coupled between a conventional synchronization signal separation circuit (not shown) in a tuner section of television receivers, as described before and the vertical amplitude control circuit 44. An input terminal 56a of the pulse processing circuit 56 is coupled to the synchronization signal separation circuit for receiving second vertical synchronization signals P2. The second vertical synchronization pulses P2 are generated at every time just before the occurrences of the first vertical synchronization pulses P1.

The pulse processing circuit 56 comprises a flip-flop 58 and an AND gate 60. Clock input terminal Cp of the flip-flop 58 is coupled to the input terminal 56a of the pulse processing circuit 56. Q output terminal of the flip-flop 58 is coupled to one input terminal of the AND gate 60. Another input terminal of the AND gate 60 is coupled to the input terminal 56a of the pulse processing circuit 56. Output terminal of the AND gate 60 is lead to an output terminal 56b of the pulse processing circuit 56 via moving contact c of switch 62 which is switched to fixed contact b. The flip-flop 58 and the AND gate 60 in the pluse processing circuit 56 operate to divide the frequency of the second vertical synchronization pulses P2 to a half.

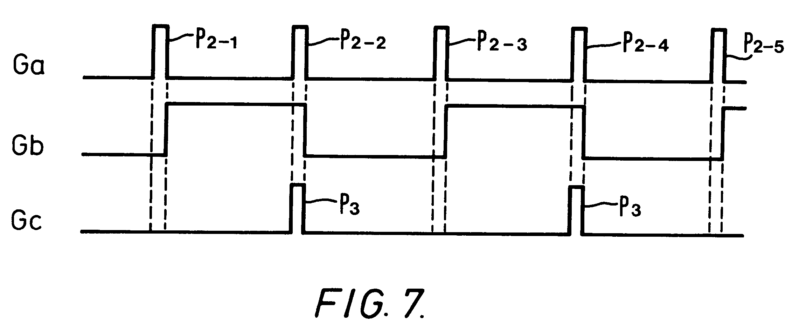

Referring now to FIGURE 7, the operation of the pulse processing circuit 56 will be briefly described. FIGURE 7 is a timechart diagram showing the second vertical synchronization pulses P2, the level on the Q output terminal of the flip-flop 58 and the output from the AND gate 60. The flip-flop 58 operates to change the level of the Q output terminal in response to every input pulses of the second vertical synchronization pulses P2. Thus, the level of the Q output terminal of the flip-flop 58 changes at times of the trailing edges of the second vertical synchronization pulses P2, as shown in FIGURE 7. In FIGURE 7, the first input of the AND gate 60 is low in level, when a first pulse P2-1 of the second vertical synchronization pulses P2 is input to the clock input terminal Cp of the flip-flop 58. As a result, the first pulse P2-1 input to the second input terminal of the AND gate 60 is prohibited to pass therethrough. The first pulse P2-1, however, changes the level on the Q output terminal of the flip-flop 58 to the high level. As a result, a second pulse P2-2 of the second vertical synchronization pulses P2 input to the second input terminal of the AND gate 60 is allowed to pass therethrough. The second pulse P2-2 changes the level on the Q output terminal of the flip-flop 58 to the low level. Then, a third pulse P2-2 of the second vertical synchronization pulses P2 is prohibited to pass through the AND gate 60. According to the above operations, the frequency of the second vertical synchronization pulses P2 is divided to a half. Thus, divided vertical synchronization pulses P3, as shown in **FIGURE 7**, are output from the pulse processing circuit 56.

The divided vertical synchronization pulses P3 are applied to the control terminal 46d of the comparator 46 for every frame of the interlaced scanning system television signals. The comparator 46 is controlled its ON/OFF operation by the divided vertical synchronization pulses P3, as shown by Graph Gc in **FIGURE 7**. Thus, the comparator 46 carries out a voltage comparing operation for either one of the first and second fields.

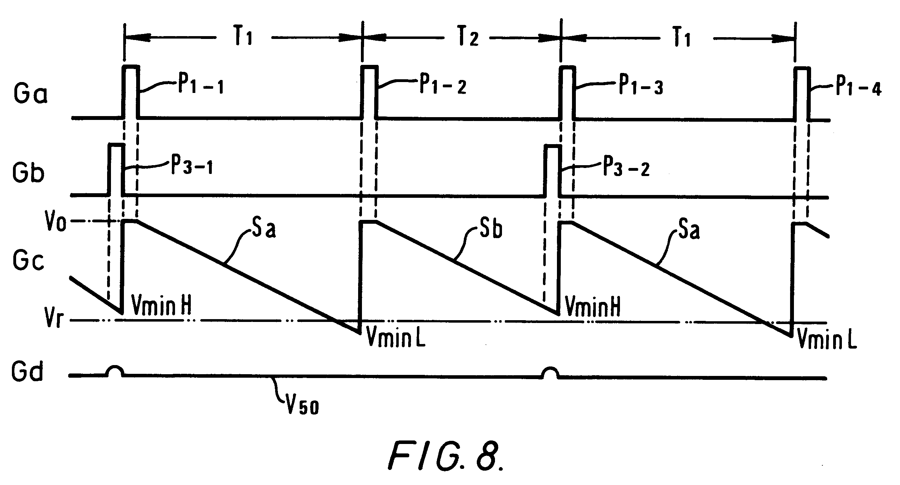

Referring now to **FIGURE 8**, the operation of the comparator 46 will be briefly described. **FIGURE 8** is a timechart diagram showing the first vertical synchronization pulses P1 (Graph Ga), the divided vertical synchronization pulses P3 (Graph Gb), a prescribed sawtooth wave signal S (Graph Gc) and a voltage $V_{50}$ charged on the second capacitor 50 (Graph Gd). The first vertical synchronization pulses P1 are supplied from the synchronization signal separation circuit in the tuner section of television receivers, as described before.

**FIGURE 8** shows a typical case in that the vertical period $T_1$ of the first field is longer than the vertical period $T_2$ of the second field ($T_1 > T_2$), similar to the case shown in **FIGURE 5**. In the above situation, each pulse P1-1, P1-2, P1-3, etc., of the first vertical synchronization pulses P1 occurs for all of the first and second fields with alternately changing intervals. On the other hand, each pulse P3-1, P3-2, etc., of the divided vertical synchronization pulses P3 occurs for only the second fields with same intervals. The minimum values $V_{min\,2}$ of the inclination sections Sb at the ends of the sawtooth wave signals of the second fields present values almost the same with each other. Further the minimum values $V_{min\,2}$ occur as the voltage higher than the reference voltage Vr of the second reference voltage source 48. The comparator 46 always outputs a charging current into the second capacitor 50 for the periods of comparing operation. Thus, the voltage $V_{50}$ charged on the second capacitor 50 is prevented from varying between a higher voltage and a lower voltage than the reference voltage Vr.

The charged voltage $V_{50}$ on the second capacitor 50, as shown by Graph Gd in **FIGURE 8**, is applied to the first input terminal 52a of the voltage-current converter 52. The voltage-current converter 52 compares the charged voltage $V_{50}$ with the voltage Vx of the third reference voltage source 54. Then, a current $I_{52}$ responsive to the charged voltage $V_{50}$ is obtained from the voltage-current converter 52. The current $I_{52}$ is then fed back to the first capacitor 20 so that the falling gradient $G_1$ of each of the inclination sections Sa of the sawtooth wave signals S for the first fields is automatically regulated. The minimum value $V_{min}L$ of the inclination sections Sa is also controlled by the feedback current $I_{52}$ from the vertical amplitude control circuit 44. Thus, the vertical amplitude of the sawtooth wave signal S is automatically regulated.

The present invention is not limited to the operation as described of the above embodiment. For example, by switching the moving contact c̲ of switch 62 to connect with contact a̲, the second vertical synchronization pulses P2 can be used in place of the divided vertical synchronization pulses P3 when the same vertical periods T1 and T2 of the first and second fields are discriminated.

Further, the pulse processing circuit 56 can divide the frequency of the second vertical synchronization pulses P2 to a quarter (1/4 times). Generally, 1/2N (N is a positive integer) times of frequency division for the second vertical synchronization pulses P2 is possible to carry out the automatic vertical amplitude regulation.

As described above, the present invention can provide an extremely preferable vertical deflection circuit for a cathode ray tube display device.

## Claims

1. A vertical deflection circuit for vertically sweeping a cathode ray tube display device for a display having first and second fields, the circuit comprising a vertical synchronisation signal source (26) for generating first vertical synchronisation pulses (P1) corresponding to both the first and second fields and second vertical synchronisation pulses (P2) which are generated just before the occurrence of every one of the first vertical synchronisation pulses (P1), a sawtooth wave signal generating circuit (10a) for generating a sawtooth wave signal (S) with a gradually falling inclination section, the sawtooth wave signal generating circuit (10a) having a capacitor means (20) which is alternately charged and discharged in synchronism with the first vertical synchronisation pulses (P1), a vertical amplitude control circuit (44) for regulating the minimum value of the inclination section of the sawtooth wave signal (S), the vertical amplitude control circuit (44) having a comparing means (46) for comparing the minimum value of the inclination section of the sawtooth wave signal (S) with a prescribed reference voltage (Vr) and a current source means (52) responsive to the comparing means (46) for regulating the charge and the discharge current of the capacitor means (20) of the sawtooth wave signal generating circuit (10a), characterised in that the vertical deflection circuit further comprises a vertical synchronisation pulse processing means (56) for dividing the frequency of the second vertical synchronisation pulses (P2) by 2N, where N is a positive integer, and for controlling the comparing means (46) such that the comparing means (46) operates only during the pulse period of the 2N divided second vertical synchronisation pulses (P3).

2.  The vertical deflection circuit of claim 1 wherein the vertical synchronisation pulse processing means includes means for generating the divided vertical synchronisation pulses (P3) in response to either one of the first and second fields.

3.  The vertical deflection circuit of claim 2 wherein the vertical synchronisation pulse processing means includes means (62) for generating the divided vertical synchronisation pulses (P3) only in the case in which the first vertical synchronisation pulses (P1) posses different vertical periods between the first and second fields.

4.  The vertical deflection circuit of claim 1 wherein the vertical synchronisation pulse processing means (56) further includes means (62) for supplying the second vertical synchronisation pulses (P2) in place of the divided vertical synchronisation pulses (P3) when the first vertical synchronisation pulses (P1) have the same vertical periods between the first and second fields.

**Patentansprüche**

1.  Vertikalablenkschaltung, geeignet zum vertikalen Abtasten eines Kathodenstrahlröhren-Anzeigegeräts zum Darstellen mit ersten und zweiten Halbbildern, wobei die Schaltung umfaßt eine Vertikalsynchronisiersignalquelle (26), geeignet zum Erzeugen erster Vertikalsynchronisierimpulse (P1), die sowohl zum ersten als auch zum zweiten Halbbild gehören, und zweiter Vertikalsynchronisierimpulse (P2), die gerade vor jedem Auftreten eines ersten Vertikalsynchronisierimpulses (P1) erzeugt werden; eine Sägezahnschwingungssignal-Generatorschaltung (10a), geeignet zum Erzeugen eines Sägezahnschwingungssignals (S) mit einem allmählich fallenden, geneigten Abschnitt, wobei die Sägezahnschwingungssignal-Generatorschaltung (10a) eine Kondensatoreinrichtung (20) besitzt, die synchron mit den ersten Vertikalsynchronisierimpulsen (P1) abwechselnd aufgeladen und entladen wird; und eine Vertikalamplitudenregelschaltung (44), geeignet zum Regeln des kleinstmöglichen Werts des geneigten Abschnitts des Sägezahnschwingungssignals (S), wobei die Vertikalamplitudenregelschaltung (44) eine Vergleichseinrichtung (46) enthält, geeignet zum Vergleichen des kleinstmöglichen Werts des geneigten Abschnitts des Sägezahnschwingungssignals (S) mit einer vorgeschriebenen Bezugsspannung (V$_r$), und eine von der Vergleichseinrichtung (46) abhängige Stromquelleneinrichtung (52), geeignet zum Regeln des Lade- und Entladestroms der Kondensatoreinrichtung (20) der Sägezahnschwingungssignal-Generatorschaltung (10a), dadurch gekennzeichnet, daß die Vertikalablenkschaltung ferner umfaßt eine Vertikalsynchronisierimpuls-Verarbeitungseinrichtung (56), geeignet zum Teilen der Frequenz der zweiten Vertikalsynchronisierimpulse (P2) durch 2N, wobei N eine positive, ganze Zahl ist, und geeignet zum Steuern der Vergleichseinrichtung (46), so daß die Vergleichseinrichtung (46) nur während der Impulsdauer der durch 2N geteilten, zweiten Vertikalsynchronisierimpulse (P3) arbeitet.

2.  Vertikalablenkschaltung nach Anspruch 1, wobei die Vertikalsynchronisierimpuls-Verarbeitungseinrichtung eine Vorrichtung enthält, geeignet zum Erzeugen der geteilten Vertikalsynchronisierimpulse (P3) abhängig entweder vom ersten oder vom zweiten Halbbild.

3.  Vertikalablenkschaltung nach Anspruch 2, wobei die Vertikalsynchronisierimpuls-Verarbeitungseinrichtung eine Vorrichtung (62) enthält, geeignet zum Erzeugen der geteilten Vertikalsynchronisierimpulse (P3) nur dann, wenn die ersten Vertikalsynchronisierimpulse (P1) zwischen den ersten und den zweiten Halbbildern unterschiedliche, vertikale Periodendauer haben.

4.  Vertikalablenkschaltung nach Anspruch 1, wobei die Vertikalsynchronisierimpuls-Verarbeitungseinrichtung (56) zudem eine Vorrichtung (62) enthält, geeignet zum Ausgeben der zweiten Vertikalsynchronisierimpulse (P2) anstelle der geteilten Vertikalsynchronisierimpulse (P3), wenn die ersten Vertikalsynchronisierimpulse (P1) die gleiche vertikale Periodendauer zwischen den ersten und den zweiten Halbbildern haben.

## Revendications

1. Un circuit de déviation verticale pour balayer verticalement un dispositif d'affichage à tube à rayons cathodiques pour un affichage présentant de premier et second champs, le circuit comprenant une source de signaux de synchronisation verticale (26) pour produire de premières impulsions de synchronisation verticale (P1) correspondant à la fois aux premier et second champs et de secondes impulsions de synchronisation verticale (P2) qui sont produites juste avant l'apparition de chacune des premières impulsions de synchronisation verticale (P1), un circuit générateur de signaux d'ondes en dents de scie (10a) pour produire un signal d'ondes en dents de scie (S) avec une partie d'inclinaison tombant graduellement, le circuit générateur de signaux d'ondes en dents de scie (10a) présentant un moyen à condensateur (20) qui est alternativement chargé et déchargé en synchronisme avec les premières impulsions de synchronisation verticale (P1), un circuit de commande d'amplitude verticale (44) pour réguler la valeur minimale de la partie d'inclinaison du signal d'ondes en dents de scie (S), le circuit de commande d'amplitude verticale (44) présentant un moyen de comparaison (46) pour comparer la valeur minimale de la partie d'inclinaison du signal d'ondes en dents de scie (S) avec une tension de référence prédéterminée (Vr) et un moyen à source de courant (52) répondant au moyen de comparaison (46) pour réguler le courant de charge et de décharge du moyen à condensateur (20) du circuit générateur de signaux d'ondes en dents de scie (10a), caractérisé en ce que le circuit de déviation verticale comprend, en outre, un moyen de traitement (56) des impulsions de synchronisation verticale afin de diviser par 2N la fréquence des secondes impulsions de synchronisation verticale (P2), où N est un nombre entier positif, et pour commander le moyen de comparaison (46) de telle manière que le moyen de comparaison (46) agisse seulement pendant la période impulsionnelle des secondes impulsions de synchronisation verticale divisée par 2N (P3).

2. Le circuit de déviation verticale de la revendication 1, dans lequel le moyen de traitement des impulsions de synchronisation verticale comprend des moyens pour produire les impulsions de synchronisation verticale divisées (P3) en réponse à l'un quelconque des premier et second champs.

3. Le circuit de déviation verticale de la revendication 2, dans lequel le moyen de traitement des impulsions de synchronisation verticale comprend des moyens (62) pour produire les impulsions de synchronisation verticale divisées (P3) seulement dans le cas où les premières impulsions de synchronisation verticale (P1) possèdent différentes périodes verticales entre les premier et second champs.

4. Le circuit de déviation verticale de la revendication 1, dans lequel le moyen de traitement (56) des impulsions de synchronisation verticale comprend, en outre, des moyens (62) pour fournir les secondes impulsions de synchronisation verticale (P2) à la place des impulsions de synchronisation verticale divisées (P3) lorsque les premières impulsions de synchronisation verticale (P1) ont les mêmes périodes verticales entre les premier et second champs.

FIG. 1.

$$G = \frac{dV}{dt} = \frac{Io}{Co}$$

FIG. 2.

FIG. 3.

FIG. 4.

EP 0 310 419 B1

FIG.5.

FIG. 6.

EP 0 310 419 B1

*FIG. 7.*

FIG. 8.